# EUROPÄISCHE PATENTSCHRIFT

(11) **EP 0 891 801 B1**
(45) Veröffentlichungstag und Bekanntmachung des Hinweises auf die Patenterteilung: **11.02.2004**
(21) Anmeldenummer: 98113225.1
(22) Anmeldetag: 16.07.1998
(51) Int. Cl.: B01D 46/52, B60H 3/06

(54) **Plattenförmiges Filterelement**
Plate-shaped filter element
Elément filtrant en forme de plaque

(30) Priorität: 18.07.1997 DE 19730817
(43) Veröffentlichungstag der Anmeldung: 20.01.1999
(73) Patentinhaber: MAHLE Filtersysteme GmbH, 70376 Stuttgart (DE)
(72) Erfinder: Schneider, Horst, 71336 Waiblingen (DE); Waibel, Hans, 71686 Remseck/Aldingen (DE)
(74) Vertreter: Patentanwalts-Partnerschaft, Rotermund + Pfusch + Bernard

(56) Entgegenhaltungen:
- EP-A- 0 759 319
- WO-A-94/11089
- DE-A- 3 439 255
- DE-A- 4 343 814
- US-A- 5 213 596
- US-A- 5 252 111
- PATENT ABSTRACTS OF JAPAN vol. 096, no. 008, 30. August 1996 & JP 08 099011 A (TSUCHIYA MFG CO LTD), 16. April 1996

## Beschreibung

Die Erfindung betrifft ein plattenförmiges Filterelement, insbesondere für Fahrzeugkabinen-Luftfilter, nach dem Oberbegriff des Anspruches 1. Ein derartiges Filterelement ist aus der JP 08 099 011 A bekannt.

Weiterhin ist aus der EP 0 759 319 A1 ein Filterelement aus einem zick-zack-förmig gefalteten Bahnenmaterial bekannt. Die Längsseiten des Filterelements sind von einem Dichtstreifen abgedeckt, der die V-förmigen Stirnseiten der einzelnen benachbarten Zick-Zack-Falten verschließt und Fehlluftströme seitlich zur Durchströmrichtung der zu filternden Luft verhindert. Darüber hinaus verleiht der Dichtstreifen dem Filterelement zusätzliche Stabilität.

An den Stirnseiten des Filterelements sind Abschlußleisten gehalten. Die Abschlußleisten sind als U-Profilleisten ausgebildet, in deren U-Schlitz die Endfalten des Filterelements aufgenommen sind. Um einen strömungsdichten Abschluß zwischen der stirnseitig angeordneten Abschlußleiste und den seitlichen Dichtstreifen an der Längsseite des Filterelements zu erreichen, werden Abschlußleiste und Dichtstreifen fest miteinander verbunden, beispielsweise durch Schweißen oder Kleben.

Das aus der JP 08 099 011 A bekannte plattenförmige Filterelement besteht aus einem zick-zack-förmig gefalteten Bahnenmaterial und einen die Längsseiten des Filterelementes abdeckenden Dichtstreifen sowie eine an den Stirnseiten des Filterelements angeordnete Abschlußleiste. An diese Abschlußleiste sind seitliche, den Dichtstreifen teilweise überdeckende Verbindungsabschnitte angeformt. Die Abschlußleiste ist aus Eisen hergestellt und die Verbindungsabschnitte sind durch rechtwinkliges Einwinkeln bzw. Umbiegen dieser Eisenleiste ausgeformt. Die Dichtstreifen bestehen aus Pappe und sind mit den abgewinkelten Verbindungsabschnitten fest verbunden.

Der Erfindung liegt das Problem zugrunde, ein gattungsgemäßes Filterelement mit stirnseitigen Abschlußleisten mit geringem Fertigungsaufwand strömungsdicht auszubilden.

Dieses Problem wird erfindungsgemäß mit den Merkmalen des Anspruches 1 gelöst.

Die beiden Verbindungsabschnitte sind seitlich an der Abschlußleiste angeordnet und erstrecken sich zumindest teilweise entlang der Längsseiten des Filterelements und der Dichtstreifen. Die Verbindungsabschnitte können mit den Dichtstreifen fest verbunden werden, wodurch sowohl in Längsrichtung als auch in Querrichtung und insbesondere in den Eckbereichen des Filterelements ein strömungsdichter Abschluß gewährleistet ist. Fehlströme, verursacht durch unzureichende Abdichtungen oder Bypässe, werden weitestgehend vermieden, so daß die zu reinigende Luft über eine lange Betriebsdauer mit einem hohen Wirkungsgrad gefiltert werden kann.

Die Verbindungsabschnitte erhöhen auch die Stabilität des Filterelements. Die Gefahr versehentlicher Beschädigungen, beispielsweise während der Montage, ist durch die Verstärkung der Eckbereiche reduziert.

Zweckmäßig sind beidseitig der Abschlußleiste Verbindungskanten gebildet, über die die Verbindungsabschnitte verschwenkbar an der Abschlußleiste gehalten sind. Die Verbindungskanten sind das Bindeglied der einteilig mit der Abschlußleiste ausgebildeten Verbindungsabschnitte. Die Verbindungskanten ermöglichen es, daß im Hinblick auf eine erleichterte Montage der Abschlußleiste die Verbindungsabschnitte winklig nach außen abgebogen sind. Nachdem die Abschlußleiste über eine Endfalte des Filterelements gestülpt worden ist, werden die Verbindungsabschnitte an die angrenzenden Dichtflächen angelegt und mit diesen verbunden.

Um die Dichtstreifen, die aus einem biegeweichen Material gefertigt sind, ohne Gefahr von Zerstörungen fest mit den Verbindungsabschnitten verbinden zu können, sind an der Abschlußleiste unmittelbar benachbart zu den Verbindungsabschnitten Stützrippen angeordnet sind. Die Stützrippen und die Verbindungsabschnitte bilden einen V-förmigen Aufnahmeschlitz, in den der Endabschnitt einer Dichtleiste aufgenommen wird. Um eine feste Verbindung zwischen den Verbindungsabschnitten und den Dichtstreifen herzustellen, werden die Verbindungsabschnitte an die Dichtstreifen angedrückt. Die Stützrippen bieten hierbei einen Halt, an dem die Verbindungsabschnitte sich abstützen können.

In einer bevorzugten Ausführung bestehen die seitlichen Dichtstreifen und die Verbindungsabschnitte aus einem aufschmelzbaren Material und können beispielsweise mittels Ultraschallschweißen dauerhaft und stoffschlüssig verbunden werden.

Bei einer Weiterentwicklung des erfindungsgemäßen Filterelementes kann an der Abschlußleiste an einer der Stirnseite des Filterelementes zugeordneten Seite ein Dichtelement, insbesondere eine Dichtlippe, angeformt sein. Entlang der Längsseiten und der Stirnseiten des Filterelementes wird üblicherweise eine Dichtung angeordnet, um das Filterelement gegenüber einer Aufnahme bzw. einem Gehäuse, in welche bzw. welches das Filterelement eingebracht ist, abzudichten, wodurch eine das Filterelement umgehende Umströmung verhindert werden kann. Durch die Anformung der stirnseitigen Dichtung an die Abschlußleiste wird der Zusammenbau des Filterelementes vereinfacht.

Entsprechend einer bevorzugten Ausführungsform ist die vorgenannte stirnseitige Dichtung einteilig mit der Abschlußleiste ausgebildet. Zweckmäßigerweise wird dabei ein als Dichtlippe ausgebildetes Dichtelement über eine scharnierartige Verbindungskante einteilig mit der Abschlußleiste hergestellt, wobei die Dichtlippe um die Längsachse dieser Verbindungskante schwenkbar und federnd nachgiebig ist. Durch die federnde Nachgiebigkeit der Dichtlippe wird ein abdichtendes Anliegen der Dichtlippe an einer Wandung einer Aufnahme, eines Gehäuses oder dergleichen unter Federspannung gewährleistet.

Bei einer besonders vorteilhaften Weiterbildung des erfindungsgemäßen Filterelementes kann an wenigstens einem der Verbindungsabschnitte ein Ansatzelement angeformt sein. Dieses Ansatzelement kann beispielsweise als sich mit dem Verbindungsabschnitt erstreckende, insbesondere bandförmige, Verlängerung ausgebildet sein. Auch sind andere zweckmäßige Ausgestaltungen des Ansatzelementes möglich, wie zum Beispiel als Griffteil, als Schlaufe, als Öse, als Schnur, als Haken, die insbesondere eine von Hand gut greifbare Form aufweisen. Dieses Ansatzelement dient dabei als Handgriff, mit dessen Hilfe die Handhabung des Filterelementes, insbesondere beim Herausnehmen aus einer zugehörigen Aufnahme, Gehäuse oder dergleichen, vereinfacht ist.

Es ist klar, daß dieses Griffteil bzw. Ansatzelement derart dimensioniert und am Filterelement angeordnet ist, daß es bei in einer Aufnahme, einem Gehäuse oder dergleichen eingebrachtem Filterelement bequem zugänglich ist. Beispielsweise können sich die an die Verbindungsabschnitte angeformten, als bandförmige Verlängerungen ausgebildeten Ansatzelemente bei an den jeweiligen Dichtstreifen des Filterelementes angebundenem Verbindungsabschnitt verbindungsfrei entlang des jeweiligen Dichtstreifens erstrekken. Um die Betätigung dieser Handgriffe zu vereinfachen, sind die Ansatzelemente zweckmäßigerweise aus einem flexiblen Material hergestellt.

Weitere Vorteile und zweckmäßige Ausführungsformen sind den weiteren Ansprüchen, der Figurenbeschreibung und den Zeichnungen zu entnehmen. Es zeigen:
- Fig. 1: eine Draufsicht auf ein plattenförmiges Filterelement mit Abschlußleisten,
- Fig. 2: eine Ansicht entlang der Schnittlinie II - II aus Fig. 1,
- Fig. 3: eine Ansicht von unten auf die Abschlußleiste,
- Fig. 4: ein Ausschnitt aus Fig. 3 in vergrößerter Darstellung,
- Fig. 5: eine Vorderansicht der Abschlußleiste,
- Fig. 6: eine Ansicht entlang der Schnittlinie VI - VI aus Fig. 5,
- Fig. 7: eine Ansicht von oben auf die Abschlußleiste,
- Fig. 8: eine Rückansicht der Abschlußleiste,
- Fig. 9: eine Seitenansicht der Abschlußleiste,
- Fig. 10: eine teilweise Ansicht wie in Fig. 2, jedoch einer anderen Ausführungform,
- Fig. 11: eine Ansicht auf einen Ausschnitt entsprechend Fig. 4, jedoch einer anderen Ausführungsform,
- Fig. 12: eine teilweise Draufsicht wie in Fig. 1, jedoch einer anderen Ausführungsform,
- Fig. 13: eine Seitenansicht entsprechend dem Pfeil XIII in Fig. 12.

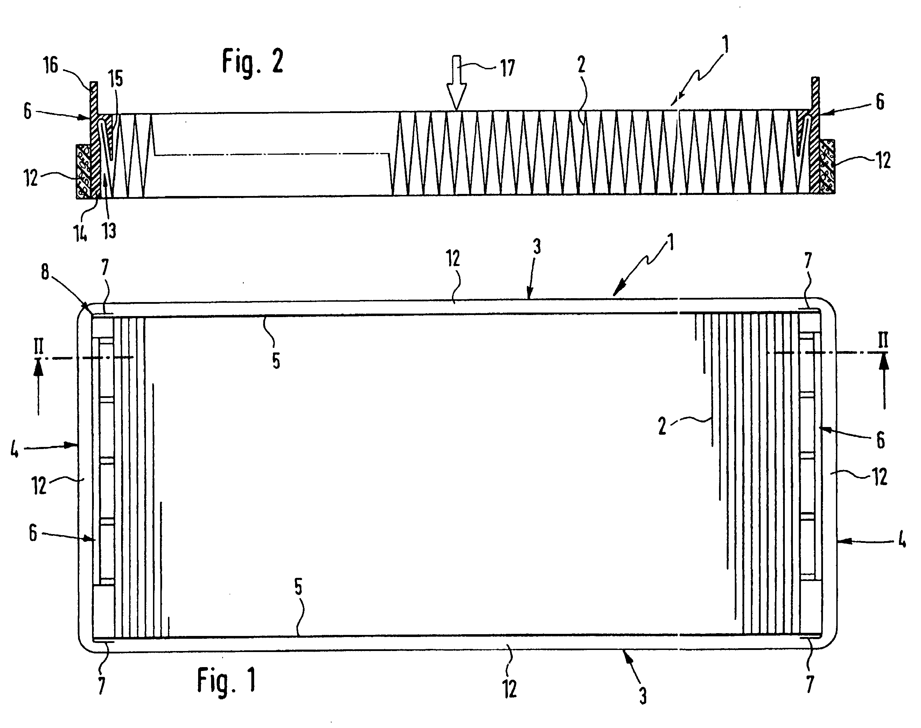

In Fig. 1 und 2 ist ein plattenförmiges Filterelement 1 gezeigt, das bevorzugt in Fahrzeugkabinen-Luftfilter eingesetzt wird. Das Filterelement 1 ist aus einem zick-zackförmigen Bahnenmaterial 2 aufgebaut, das aus einem luftdurchlässigen, aufschmelzbaren Kunststoffvlies, insbesondere ein Thermoplast, besteht. An beiden Längsseiten 3 des Filterelements 1 ist ein Dichtstreifen 5 aufgeklebt bzw. aufgeschmolzen, der ebenfalls aus einem Kunststoffvlies besteht. Die Dichtstreifen 5 an den Längsseiten 3 verleihen dem Filterelement 1 Stabilität und verhindern Fehlluftströme.

An beiden Stirnseiten 4 des Filterelements 1 sind Abschlußleisten 6 angeordnet, die einerseits für einen strömungsdichten Abschluß in den Eckbereichen des Filterelements und andererseits für zusätzliche Stabilität sorgen. Die Abschlußleisten 6 bestehen aus einem biege- und torsionssteifen Kunststoff, der ebenso wie die Dichtstreifen aufgeschmolzen werden kann. Die Abschlußleisten 6 weisen an beiden Seiten Verbindungsabschnitte 7 auf, die als filmscharnierähnliche Schweißlappen ausgebildet sind. Die Verbindungsabschnitte 7 sind einteilig mit der Abschlußleiste 6 ausgebildet und über eine Verbindungskante 8 mit der Abschlußleiste verbunden. Die Verbindungsabschnitte 7 überdecken die seitlichen Endabschnitte des Filterelements 1 und der Dichtstreifen 5. In dem in Fig. 1 und 2 dargestellten fertig montierten Zustand liegen die Verbindungsabschnitte fest an den Dichtstreifen 5 an und klemmen diese ein bzw. sind mittels Ultraschallschweißen stoffschlüssig mit diesen verbunden.

Weiterhin ist Fig. 1 zu entnehmen, daß auf den Längsseiten 3 und den Stirnseiten 4 umlaufend um das Filterelement 1 ein elastisches Dichtmaterial 12 aufgeklebt ist.

In Fig. 2 ist gezeigt, wie die Endfalte des Filterelements 1 im Bereich der Stirnseiten in eine U-förmige Aufnahme 13 in der Abschlußleiste einragt, die zwischen einer Grundplatte 14 und einem Quersteg 15 gebildet ist. Im Bereich der Grundplatte 14 ist ein Montageabschnitt 16 vorgesehen, der über das Niveau des Filterelementes hinausragt.

Das Filterelement 1 wird von oben in Strömungsrichtung 17 von der zu reinigenden Luft durchströmt.

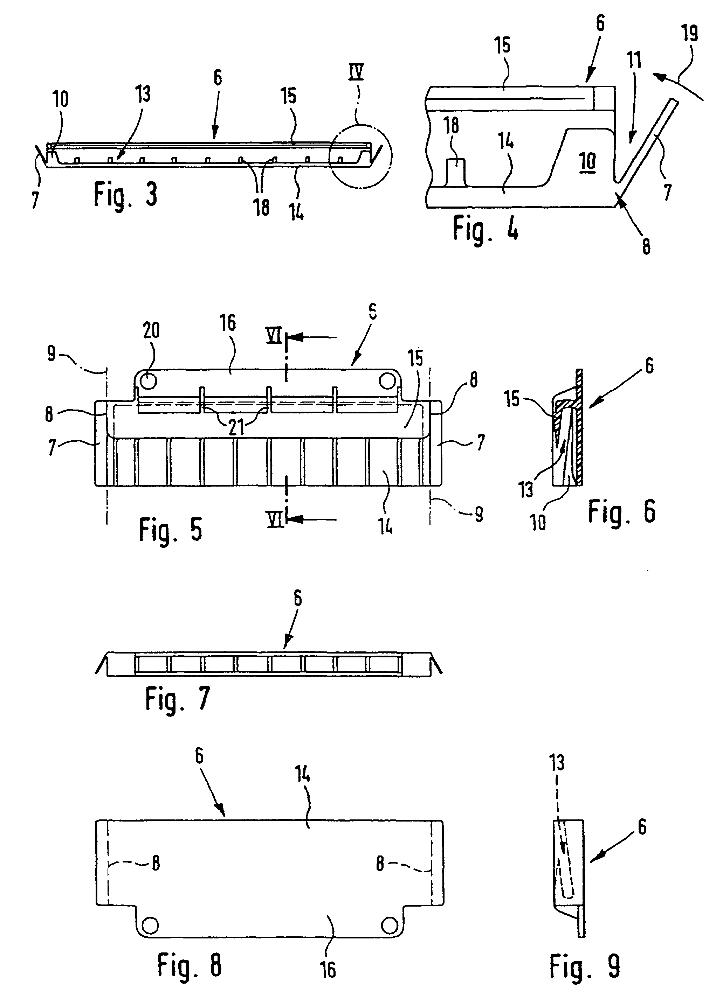

Die Fig. 3 bis 9 zeigen verschiedene Ansichten der Abschlußleiste 6. Der Fig. 3 und der Ausschnittvergrößerung nach Fig. 4 ist zu entnehmen, daß an beiden Seiten der Abschlußleiste 6 die Verbindungsabschnitte 7 seitlich abstehen. Unmittelbar benachbart zu den Verbindungsabschnitten 7 verlaufen Stützrippen 10. Die Stützrippen 10 sind ebenso wie die Verbindungsabschnitte 7 an der Grundplatte 14 angeformt. Zwischen den Stützrippen 10 und den seitlich abstehenden Verbindungsabschnitten 7 ist ein V-förmiger Aufnahmeschlitz 11 zur Aufnahme des Endabschnitts des Dichtstreifens gebildet. Die Verbindungsabschnitte 7 bilden im unbelasteten Grundzustand mit den Stützrippen 10 einen Winkel von etwa 45°. Die Verbindungsabschnitte selbst sind biegeweich, insbesondere elastisch ausgebildet. Die Verbindungskante 8, über die die Verbindungsabschnitte 7 an der Grundplatte 14 gehalten sind, ermöglicht in Verbindung mit der biegeweichen Ausbildung eine Verdrehung der Verbindungsabschnitte in Pfeilrichtung 19 in Richtung der Stützrippe 10. Die Länge eines Verbindungsabschnittes entspricht etwa dem Abstand von der Außenseite der Grundplatte 14 zur Außenseite des Querstegs 15.

Bei der Montage wird die Abschlußleiste 6 mit der U-förmigen Aufnahme 13 auf eine Endfalte an der Stirnseite des Filterelements 1 aufgesetzt, wobei die Endabschnitte der Dichtstreifen 5 in den seitlich angeordneten, V-förmigen Aufnahmeschlitz 11 einragen. Um eine strömungsdichte Verbindung zu erhalten, werden die seitlichen Verbindungsabschnitte 7 gegen die jeweiligen Stützrippen 10 gedrückt, so daß die Dichtstreifen festgeklemmt sind. Mittels Kleben, Ultraschallschweißen oder Verschweißen durch direkte Wärmezufuhr wird eine dauerhafte Verbindung erzielt.

An der Grundplatte 14, in der U-förmigen Aufnahme 13 zwischen der Grundplatte und dem Quersteg 15, sind Versteifungsrippen 18 vorgesehen, die der Abschlußleiste zusätzliche Stabilität verleihen.

Fig. 5 ist zu entnehmen, daß die Verbindungsabschnitte 7 um eine Längsachse 9 verdrehbar ist, welche längs durch die Verbindungskante 8 verläuft. Aus dieser Figur geht auch hervor, daß die Montageplatte 16 die Grundplatte 14 überragt und mit Montagebohrungen 20 versehen ist. Im Übergangsbereich zwischen dem Quersteg 15 und der Montageplatte 16 sind zusätzliche Versteifungsrippen 21 angeordnet, um dem zur Seite hin offenen Quersteg 15 Stabilität zu geben.

Gemäß Fig. 6 weist die U-förmige Aufnahme 13 einen kleinen Neigungswinkel gegenüber dem Quersteg 15 auf, der zu seiner offenen Seite hin einen sich verjüngenden Querschnitt hat. Die Stützrippen 10 weisen den gleichen Neigungswinkel auf, so daß im Bereich zwischen Stützrippen 10 und Quersteg 15 die Aufnahme 13 einen konstant bleibenden Querschnitt hat. Der Neigungswinkel entspricht etwa demjenigen der in die Aufnahme einragenden Endfalte des Filterelements, siehe auch Fig. 2 und 9.

Aus Fig. 7 geht hervor, daß die Abschlußleiste 6 über ihre Länge eine konstante Dicke hat. Gemäß Fig. 8 liegen die Verbindungskante 8 und der Montageabschnitt 16 in einer Ebene mit der Grundplatte 14.

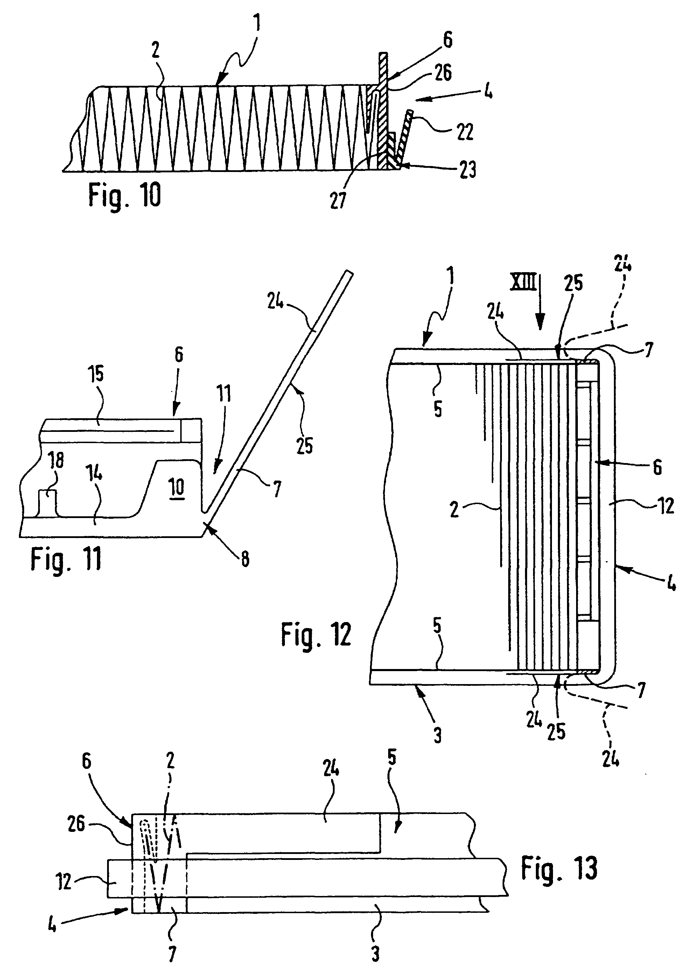

Bei einer Weiterentwicklung entsprechend Fig. 10 kann eine die Stirnseite 4 des Filterelementes 1 bildende Außenseite 26 der Abschlußleiste 6 mit einer Dichtlippe 22 ausgestattet sein. Die Dichtlippe 22 kann, wie dargestellt, als separates Element an die Abschlußleiste 6, beispielsweise durch Aufschmelzen, angeformt sein. Ebenso ist eine Ausführungsform möglich, bei der die Dichtlippe 22 einteilig mit der Abschlußleiste 6 hergestellt ist.

Die Dichtlippe 22 ist über eine Verbindungskante 23 mit einem Basisteil 27 verbunden, das seinerseits mit der Außenseite 26 der Abschlußleiste 6 verbunden bzw. daran angeformt ist. Wenn die Dichtlippe 22 einteilig mit der Abschlußleiste 6 hergestellt ist, erfolgt die Anbindung der Dichtlippe 22 an die Abschlußleiste 6 über die Verbindungskante 23 in entsprechender Weise. Die Dichtlippe 22 besteht vorzugsweise aus einem elastischen Material, so daß die Dichtlippe 22 federnd nachgiebig ist. Hierbei schwenkt die Dichtlippe 22 um die Längsachse der Verbindungskante 23.

Entsprechend Fig. 11 kann bei einer anderen Ausführungsform an dem Verbindungsabschnitt 7 ein Ansatzelement 24 angeformt sein, das hier in Form einer Verlängerung des Verbindungsabschnittes 7 ausgebildet ist. Bei der in Fig. 11 dargestellten Ausführungsform sind der Verbindungsabschnitt 7 und dessen Verlängerung 24 einteilig hergestellt, wodurch ein bandförmiges Element 25 ausgebildet wird. Dabei bildet ein der Abschlußleiste 6 zugewandter erster Abschnitt dieses Elementes 25 den Verbindungsabschnitt 7, während ein daran angrenzender, von der Abschlußleiste 6 abgewandter zweiter Abschnitt die Verlängerung 24 bildet.

Über die Verbindungskante 8 ist das ganze Element 25 wie der Verbindungsabschnitt 7 bezüglich der Längsachse der Verbindungskante 8 schwenkbar.

Bei einer bevorzugten Ausführungsform entsprechend Fig. 12 wird der Verbindungsabschnitt 7 mit dem jeweils zugeordneten Dichtstreifen 5, insbesondere durch Aufschmelzen verbunden. Durch die Anbindung des Verbindungsabschnittes 7 an den Dichtstreifen 5 erstreckt sich der Verbindungsabschnitt 7 und somit auch die daran anschließende Verlängerung 24 entlang des Dichtstreifens 5. Im Unterschied zum Verbindungsabschnitt 7 ist jedoch die Verlängerung 24 nicht mit dem Dichtstreifen 5 verbunden, so daß dieser entsprechend der gestrichelten Darstellung in Fig. 12 vom Dichtstreifen 5 entfernt und flexibel umgebogen werden kann. Auf diese Weise bildet die Verlängerung 24 einen gut zugänglichen Handgriff, mit dessen Hilfe die Handhabung des Filterelementes 1 vereinfacht wird. Beispielsweise kann das Filterelement 1 an den so gebildeten Griffen (Verlängerungen 24) aus einer Aufnahme, aus einem Gehäuse oder dergleichen herausgezogen werden.

Entsprechend Fig. 13 kann die Verlängerung 24 auf einen Teilbereich des Verbindungsabschnittes 7 begrenzt sein. Insbesondere erstreckt sich die Verlängerung 24 in einer Richtung, die senkrecht zu den Längsseiten 3 und Stirnseiten 4 des Filterelementes 1 verläuft, etwa bis zu dem Dichtmaterial 12, das die Längsseiten 3 und Stirnseiten 4 des Filterelementes 1 umfassend am Filterelement 1 angeordnet ist. Beispielsweise ist das Dichtmaterial 12 auf der Außenseite 26 der Abschlußleiste 6, auf der Außenseite des Verbindungsabschnittes 7 und auf dem Dichtstreifen 5 durch Aufschmelzen angebracht.

## Patentansprüche

1. Plattenförmiges Filterelement, insbesondere für Fahrzeugkabinen-Luftfilter, bestehend aus zick-zack-förmig gefaltetem Bahnenmaterial (2), mit einem die Längsseiten (3) des Filterelements (1) abdeckenden Dichtstreifen (5) und einer an den Stirnseiten (4) des Filterelements (1) angeordneten Abschlußleiste (6), wobei an der Abschlußleiste (6) seitliche, den Dichtstreifen (5) teilweise überdeckende Verbindungsabschnitte (7) einteilig angeformt sind,
**dadurch gekennzeichnet,**
- **dass** an der Abschlußleiste (6) unmittelbar benachbart zu den Verbindungsabschnitten (7) Stützrippen (10) angeordnet sind,
- **dass** bei der Montage in einem unbelasteten Grundzustand zwischen den Verbindungsabschnitten (7) und den Stützrippen (10) V-förmige Aufnahmeschlitze (11) gebildet sind, in welche die Endabschnitte der Dichtstreifen (5) bei der Montage einragen,
- **dass** die Verbindungsabschnitte (7) biegsam ausgebildet sind.

2. Filterelement nach Anspruch 1,
**dadurch gekennzeichnet,**
**dass** die Verbindungsabschnitte (7) über eine scharnierähnliche Verbindungskante (8) einteilig mit der Abschlußleiste (6) ausgebildet sind und um die Längsachse (9) der Verbindungskante (8) schwenkbar sind.

3. Filterelement nach Anspruch 1 oder 2,
**dadurch gekennzeichnet,**
**dass** der die Längsseiten (3) des Filterelements (1) abdekkende Dichtstreifen (5) und die Verbindungsabschnitte (7) aus einem'aufschmelzbaren Material bestehen.

4. Filterelement nach einem der Ansprüche 1 bis 3,
**dadurch gekennzeichnet,**
**dass** die Verbindungsabschnitte (7) fest und strömungsdicht mit den Dichtstreifen (5) verbunden sind.

5. Filterelement nach einem der Ansprüche 1 bis 4,
**dadurch gekennzeichnet,**
**dass** an der Abschlußleiste (6) an einer vom Bahnenmaterial (2) abgewandten Seite (26) eine Dichtlippe (22) angeformt ist.

6. Filterelement nach Anspruch 5,
**dadurch gekennzeichnet,**
**dass** die Dichtlippe (22) über eine scharnierartige Verbindungskante (23) einteilig mit der Abschlußleiste (6) ausgebildet ist und um die Längsachse der Verbindungskante (23) federnd nachgebend schwenkbar ist.

7. Filterelement nach einem der Ansprüche 1 bis 6,
**dadurch gekennzeichnet,**
**dass** an wenigstens einem der Verbindungsabschnitte (7) ein Ansatzelement (24) angeformt ist.

8. Filterelement nach Anspruch 17,
**dadurch gekennzeichnet,**
**dass** das Ansatzelement als Verlängerung (24) des Verbindungsabschnittes (7) ausgebildet ist.

9. Filterelement nach Anspruch 7,
**dadurch gekennzeichnet,**
**dass** bei an den jeweiligen Dichtstreifen (5) angebundenem Verbindungsabschnitt (7) sich die daran angeformte Verlängerung (24) verbindungsfrei entlang des Dichtstreifens (5) erstreckt.

10. Filterelement nach einem der Ansprüche 7 bis 9,
**dadurch gekennzeichnet,**
**dass** der Verbindungsabschnitt (7) und das Ansatzelement (24) als einteiliges Element (25) ausgebildet sind, wobei ein der Abschlußleiste (6) zugewandter Abschnitt dieses Elementes (25) den Verbindungsabschnitt (7) bildet und ein daran anschließender, von der Abschlußleiste (6) abgewandter Abschnitt dieses Elementes (25) das Ansatzelement (24) bildet.

11. Filterelement nach einem der Ansprüche 7 bis 10,
**dadurch gekennzeichnet,**
**dass** sich das Ansatzelement (24) in Richtung einer Normalen zur Ebene des Filterelementes (1) nur teilweise entlang des Verbindungsabschnittes (7) erstreckt.

12. Filterelement nach Anspruch 11,
**dadurch gekennzeichnet,**
**dass** sich das Ansatzelement (24) in Richtung der Normalen bis zu einem Dichtmaterial (12) erstreckt, das zumindest entlang der Längsseite (3) des Filterelementes (1) an dem Dichtstreifen (5) angebracht ist.

## Claims

1. A plate-shaped filter element, in particular for vehicle compartment air filters, comprising a web of pleated material (2), having a sealing strip (5) which covers the longitudinal sides (3) of the filter element (1) and a closing strip (6) which is provided on the end faces (4) of the filter element (1) with lateral connecting sections (7) integrally molded in one piece on the closing strip (6) so that they partially cover the sealing strips (5),
**characterized in that**
- supporting ribs (10) are provided on the closing strip (6) immediately adjacent to the connecting sections (7),
- in assembly in an unloaded ground state, V-shaped receiving slots (11) are formed between the connecting sections (7) and the supporting ribs (10), with the end sections of the sealing strips (5) protruding into these V-shaped slots when assembled,
- the connecting sections (7) are designed to be flexible.

2. The filter element according to Claim 1,
**characterized in that**
the connecting sections (7) are designed in one piece with the closing strip (6) by way of a hinge-like connecting edge (8) and can be pivoted about the longitudinal axis (9) of the connecting edge (8).

3. The filter element according to Claim 1 or 2,
**characterized in that**
the sealing strip (5) which covers the longitudinal sides (3) of the filter element (1) and the connecting sections (7) are made of a fusible material.

4. The filter element according to any one of Claims 1 through 3,
**characterized in that**
the connecting sections (7) are fixedly connected in an airtight manner to the sealing strips (5).

5. The filter element according to any one of Claims 1 through 4,
**characterized in that**
a sealing lip (22) is integrally molded on the closing strip (6) on a side (26) which faces away from the web material (2).

6. The filter element according to Claim 5,
**characterized in that**
the sealing lip (22) is designed in one piece with the closing strip (6) by way of a hinge-like connecting edge (22) and can be pivoted about the longitudinal axis of the connecting edge (23) in a flexible manner.

7. The filter element according to any one of Claims 1 through 6,
**characterized in that**
a shoulder element (24) is integrally molded on at least one of the connecting sections (7).

8. The filter element according to Claim 17,
**characterized in that**
the shoulder element is designed as an extension (24) of the connecting section (7).

9. The filter element according to Claim 7,
**characterized in that**
with the connecting section (7) connected to the respective sealing strip (5), the extension (24) which is integrally molded on the connecting section extends along the sealing strip (5) without any connection.

10. The filter element according to any one of Claims 7 through 9,
**characterized in that**
the connecting section (7) and the shoulder element (24) are designed as a one-piece element (25), whereby a section of this element (25) facing the closing strip (6) forms the connecting section (7), and a section of this element (25) which is connected thereto and is facing away from the closing strip (6) forms the shoulder element (24).

11. The filter element according to any one of Claims 7 through 10,
**characterized in that**
the shoulder element (24) extends only partially along the connecting section (7) in the direction of the normal to the plane of the filter element (1).

12. The filter element according to Claim 11,
**characterized in that**
the shoulder element (24) extends in the direction of the normal to a sealing material (12) which is provided on the sealing strip (5) at least along the longitudinal side (3) of the filter element (1).

## Revendications

1. Élément filtrant en forme de plaque, en particulier pour filtres à air de cabines de véhicules, constitué d'un matériau en feuille (2) plié en zigzag, comprenant un ruban d'étanchéité (5) qui recouvre les côtés longitudinaux (3) de l'élément filtrant (1), et une barre de fermeture (6) disposée sur les côtés frontaux (4) de l'élément filtrant (1), des sections de liaison (7) latérales, qui recouvrent en partie le ruban d'étanchéité (5), étant conformées d'une seule pièce sur la barre de fermeture (6),
**caractérisé en ce**
- **que** des nervures d'appui (10) sont disposées sur la barre de fermeture (6) au voisinage immédiat des sections de liaison (7),
- **que** lors du montage, dans un état de base non chargé, sont formées entre les sections de liaison (7) et les nervures d'appui (10) des fentes de réception en V (11) dans lesquelles pénètrent les sections extrêmes des rubans d'étanchéité (5) lors du montage,
- **que** les sections de liaison (7) sont flexibles.

2. Élément filtrant suivant la revendication 1,
**caractérisé en ce**
**que** les sections de liaison (7) sont réalisées d'une seule pièce avec la barre de fermeture (6) par l'intermédiaire d'une arête de liaison (8) analogue à une charnière, et peuvent pivoter autour de l'axe longitudinal (9) de l'arête de liaison (8).

3. Élément filtrant suivant l'une des revendication 1 et 2,
**caractérisé en ce**
**que** le ruban d'étanchéité (5) qui recouvre les côtés longitudinaux (3) de l'élément filtrant (1) et les sections de liaison (7) sont constitués d'un matériau fusible.

4. Élément filtrant suivant l'une des revendications 1 à 3,
**caractérisé en ce**
**que** les sections de liaison (7) sont reliées fixement et de façon étanche à l'écoulement aux rubans d'étanchéité (5).

5. Élément filtrant suivant l'une des revendications 1 à 4,
**caractérisé en ce**
**qu'**une lèvre d'étanchéité (22) est conformée sur la barre de fermeture (6), sur un côté (26) opposé au matériau en feuille (2).

6. Élément filtrant suivant la revendication 5,
**caractérisé en ce**
**que** la lèvre d'étanchéité (22) est réalisée d'une seule pièce avec la barre de fermeture (6) par l'intermédiaire d'une arête de liaison (23) de type charnière, et peut pivoter en fléchissant élastiquement autour de l'axe longitudinal de l'arête de liaison (23).

7. Élément filtrant suivant l'une des revendications 1 à 6,
**caractérisé en ce**
**qu'**un appendice (24) est conformé sur au moins l'une des sections de liaison (7).

8. Élément filtrant suivant la revendication 17,
**caractérisé en ce**
**que** l'appendice est réalisé en tant que prolongement (24) de la section de liaison (7).

9. Élément filtrant suivant la revendication 7,
**caractérisé en ce**
**que**, lorsque la section de liaison (7) est attachée au le ruban d'étanchéité correspondant (5), le prolongement (24) qui y est conformé s'étend sans être lié le long du ruban d'étanchéité (5).

10. Élément filtrant suivant l'une des revendications 7 à 9,
**caractérisé en ce**
**que** la section de liaison (7) et l'appendice (24) sont réalisés en tant qu'élément monobloc (25), une section de cet élément (25) tournée vers la barre de fermeture (6) formant la section de liaison (7), et une section de cet élément (25) suivant celle-ci, opposée à la barre de fermeture (6), formant l'appendice (24).

11. Élément filtrant suivant l'une des revendications 7 à 10,
**caractérisé en ce**
**que** l'appendice (24) ne s'étend que partiellement le long de la section de liaison (7) dans la direction d'une normale au plan de l'élément filtrant (1).

12. Élément filtrant suivant la revendication 11,
**caractérisé en ce**
**que** l'appendice (24) s'étend dans la direction de la normale jusqu'à un matériau d'étanchéité (12) qui est appliqué sur le ruban d'étanchéité (5) au moins le long du côté longitudinal (3) de l'élément filtrant (1).
